# EUROPEAN PATENT APPLICATION

(11) **EP 4 184 628 A1**
(43) Date of publication of application: **24.05.2023**
(21) Application number: 21208924.7
(22) Date of filing: 18.11.2021
(51) Int. Cl.: H01M 10/04

(54) **ELECTROCHEMICAL DEVICE PRODUCTION**

(71) Applicant: ABB SCHWEIZ AG, 5400 Baden (CH)
(72) Inventor: SCHULER, Gabriel, 6415 Arth (CH); HE, Minglong, 6415 Arth (CH); CHARTOUNI, Daniel, 5430 Wettingen (CH); KRAMER, Axel, 8057 Zürich (CH)
(74) Representative: Kransell & Wennborg KB

(57) **Abstract**

An electrochemical device producing arrangement comprises at least one wheel for cooperating with a material moving device, where the at least one wheel comprises a first wheel (12) positioned at a first location in relation to the material moving device (14A) and configured to place a sheet of a first electrochemical device forming material at a first sheet placing position (PLi), and the cell material moving device (14A) being configured to receive the sheet of first electrochemical device material at the first sheet placing position (PLi), move the sheet of first electrochemical device forming material away from the first sheet placing position (PLi) and to place an electrochemical device stack comprising the sheet of first electrochemical device forming material (42A) in a depositing area (26).

## Description

### FIELD OF INVENTION

The present invention relates to an arrangement and a method for producing electrochemical devices.

### BACKGROUND

Due to the increased use of renewable energy sources, electrochemical devices, i.e. devices using electrodes and/or membranes in electrolyte that deliver and/or store electrical energy such as batteries, have become of interest in a wide range or areas. Consequently, also battery cell production is of interest.

A number of battery cell production techniques exist, where one is disclosed in CN 1129943416. This document describes a battery pole piece rolling and stacking apparatus where a first roll with pieces of a first laminate formed between a first electrode and a first diaphragm and a second roll with pieces of a second laminate formed between a second electrode and a second diaphragm are wound onto a pole piece winding part.

It is of interest to improve on the way that electrochemical devices, such as battery cells, are produced, especially with regard to the speed with which production is made.

### SUMMARY OF THE INVENTION

One object of the present invention is to provide an improved production of electrochemical devices.

This object is according to a first aspect achieved through an arrangement for producing electrochemical devices comprising at least one wheel for cooperating with a material moving device, where the at least one wheel comprises a first wheel,
the first wheel being positioned at a first location in relation to the material moving device and configured to place a sheet of a first electrochemical device forming material at a first sheet placing position, and
the material moving device being configured to receive the sheet of first electrochemical device forming material at the first sheet placing position, to move the sheet of first electrochemical device forming material away from the first sheet placing position and to place an electrochemical device stack comprising said sheet of first electrochemical device forming material in a depositing area.

The object is according to a second aspect achieved through a method of producing electrochemical devices comprising:
obtaining, by a first wheel that is positioned at a first location in relation to a material moving device, a sheet of first electrochemical device forming material,
placing, by the first wheel, the sheet of the first electrochemical device forming material in a first sheet placing position,
moving, by the material moving device, the sheet of first electrochemical device forming material away from the first sheet placing position, and placing, by the material moving device, an electrochemical device stack comprising the sheet of first electrochemical device forming material in a depositing area.

The first sheet placing position may thus be a position at which the material moving device is to receive sheets of the first electrochemical device forming material from the first wheel.

The first sheet of electrochemical device forming material may comprise first electrode material. It may additionally comprise second electrode material and/or separator material.

The material moving device may comprise a moveable transportation surface moved along a transportation direction, which transportation direction may be linear or elliptical, such as circular.

The first wheel may have a circumferential surface or rim.

According to a first variation of the first aspect, the first wheel is configured to obtain the sheet of first electrochemical device forming material at a first sheet receiving position and to move the sheet to the first sheet placing position through holding the sheet to the circumferential surface of the wheel during rotation.

According to a corresponding variation of the second aspect, the obtaining, of the sheet of first electrochemical device forming material is made at a first sheet receiving position and the method further comprises moving, by the first wheel, the sheet to the first sheet placing position through holding the sheet to the circumferential surface of the wheel during rotation.

The first sheet placing position may be a fixed position at the perimeter of the first wheel. Also, the first sheet placing position may be a fixed position at the perimeter of the first wheel. Thereby they do not rotate together with the first wheel.

According to a further variation of the first aspect, the arrangement further comprises a second wheel being positioned at a second location in relation to the material moving device and configured to place a sheet of second electrochemical device forming material in a second sheet placing position and the material moving device is configured to move the sheet of first electrochemical device forming material to the second sheet placing position and to receive the sheets of the second electrochemical device forming material from the second wheel at the second sheet placing position and stack them on the sheets of first electrochemical device forming material for forming the electrochemical device stack.

In a corresponding variation of the second aspect, the method further comprises obtaining, by a second wheel being positioned at a second location in relation to the material moving device, a sheet of second electrochemical device forming material and placing the sheet of second electrochemical device forming material in a second sheet placing position, moving by the material moving device the sheet of first electrochemical device forming material to the second sheet placing position and stacking, at the second sheet placing position, the sheet of the second electrochemical device forming material on the sheet of first electrochemical device forming material for forming the electrochemical device stack.

The first and second locations may be separate locations along a transportation direction of the material moving device.

The second electrochemical device forming material may comprise separator material and/or second battery electrode material.

According to yet another variation of the first aspect, the arrangement comprises a first cutter configured to cut the sheet of first electrochemical device forming material out from a roll of first electrochemical device forming material.

According to a corresponding variation of the second aspect, the method further comprises cutting, by a first cutter, the sheet of first electrochemical device forming material out from a roll of first electrochemical device forming material.

The arrangement may use various principles for holding sheets of electrochemical device forming material in various stacking places, which holding principles may be based on mechanical, electrical/electrostatic, pneumatic, temperature (e.g. shock freezing), glueing or magnetic principles.

The wheels that cooperate with the material moving device may for instance use any of the principles when moving sheets of electrochemical device sheets of device forming material to a corresponding sheet placing position.

The material moving device may use one of the above-mentioned principles for moving sheets of electrochemical device forming materials.

The material moving device may additionally comprise a number of sheet holding elements. In this case the sheet holding elements would use one of the previously-mentioned principles for holding sheets of electrochemical device forming materials.

According to another variation of the first aspect, the material moving device is configured to move these sheet holding elements to the first sheet placing position for receiving the sheets of the first electrochemical device forming material from the first wheel.

According to a corresponding variation of the second aspect, the method further comprises moving, by the material moving device, the sheet holding elements to the first sheet placing position for receiving the sheets of the first electrochemical device forming material from the first wheel.

A sheet holding element may pass the first sheet placing position only once or it may pass the first sheet placing position more than one time before it deposits an electrochemical device stack in the depositing area.

The sheet holding elements may be empty or carry one or more sheets of electrochemical device forming material at the sheet placing position.

According to another variation of the first aspect, the arrangement further comprises an aligning system configured to align the first wheel or the moving material device to the first sheet placing position.

According to a corresponding variation of the second aspect, the method further comprises aligning the first wheel or the moving material device to the first sheet placing position.

The material moving device may be a linear material moving device, such as a conveyor belt.

In this case the sheet holding elements may be transported on the linear material moving device and the aligning system comprises aligning elements, each being configured to align a corresponding wheel with the sheet holding elements passing through a sheet placing position associated with the wheel.

In this case the method may further comprise aligning, by an aligning element, a corresponding wheel with the sheet holding elements passing through a sheet placing position associated with the wheel.

Alternatively, the material moving device may be a central wheel, with the cooperating wheels being peripheral wheels.

In this case the sheet holding elements may be transported on the surface of the central wheel.

The aligning system may in this case comprise a cam shaft with cam wheels, where each cam wheel is configured to raise a corresponding sheet holding element to a sheet placing position associated with a peripheral wheel.

The aligning may in this case comprise raising, by a cam wheel on a cam shaft, a corresponding holding element to a sheet placing position associated with a peripheral wheel.

The arrangement may additionally comprise a first electrolyte soaking device configured to soak the first electrochemical device forming material in electrolyte before sheets of the electrochemical device forming material are being placed at the first sheet placing position.

The method may in this case additionally comprise soaking, by a first electrolyte soaking device, the first electrochemical device forming material in electrolyte before sheets of the first electrochemical device forming material are being placed at the first sheet placing position.

The provision of electrolyte soaking and cutting could be exchanged in the process line. e.g. cutting could be done before electrolyte soaking or vice versa.

Electrolyte soaking or dipping parts are arranged as single or double side soaking/coating devices to either coat only one or both sides of a double sided first electrochemical device forming material, which may be a coated active electrode material.

A first side of the first electrochemical device forming material may be guided through the electrolyte soaking device by a first belt, which first belt may be electrolyte permeable in order to soak the first side of first electrochemical device forming material. A second side of the first electrochemical device forming material may be guided through the electrolyte soaking device by a second belt, which second belt may be electrolyte permeable in order to soak the second side of first electrochemical device forming material.

The arrangement may additionally comprise a first shock freezing chamber configured to freeze and fix the electrolyte within the electrode. In addition shock freezing could be used to bind two layers before stacking e.g. the first layer to a second electrochemical forming material.

In this case the method may additionally comprise freezing, in a first shock freezing chamber, the first electrochemical device forming material.

The freezing may be done in order to fix the electrolyte in the first electrochemical device forming material. In case the first electrochemical device forming material is a laminate comprising a number of layers including an electrode and a separator layer, the freezing may instead or in addition be done for adhering of the different layers to each other without additional process step.

The arrangement may also comprise a second electrolyte soaking device configured to soak the second electrochemical device forming material in electrolyte before sheets of the second electrochemical device forming material are being placed at the second sheet placing position.

The method may in this case additionally comprise soaking, by a second electrolyte soaking device, the second electrochemical device forming material in electrolyte before sheets of the second electrochemical device forming material are being placed at the second sheet placing position.

Electrolyte soaking could be done on one or both of the electrochemical device forming materials, where both may comprise electrode material or one may comprise an electrochemical device forming material being made up of electrode material and separator material and the other only separator material. It is additionally possible that soaking is made on one or both sides of the second electrochemical device forming material.

A first side of the second electrochemical device forming material may be guided through the electrolyte soaking device by a third belt, which third belt may be electrolyte permeable in order to soak the first side of second electrochemical device forming material. A second side of the second electrochemical device forming material may be guided through the electrolyte soaking device by a fourth belt, which fourth belt may be electrolyte permeable in order to soak the second side of second electrochemical device forming material.

The arrangement may additionally comprise a second shock freezing chamber configured to freeze the second electrochemical device forming material.

In this case the method may additionally comprise freezing, in a second shock freezing chamber, the second electrochemical device forming material.

The freezing may be done in order to fix the electrolyte in the second electrochemical device forming material. In case the second electrochemical device forming material is a laminate comprising a number of layers including an electrode and a separator layer, the freezing may additionally or instead be done for adhering of the different layers to each other without additional process step.

The first wheel may be placed in a first enclosure with a first production environment. In this case the arrangement may further comprise a second enclosure with a second production environment, and a first gate between the first and second enclosure and through which first electrochemical device forming material is passed from the second to the first enclosure for being placed on the movable material device by the first wheel. The first gate may be realized as a first pair of cooperating cylinder drums between which the first electrochemical device forming material is passed.

Also the second wheel may be placed in the first enclosure. In this case there may be a second gate between the first enclosure with the first production environment and the second enclosure with the second production environment, through which gate second electrochemical device forming material is passed from the second to the first enclosure for being placed on the movable material device by the second wheel. The second gate may be realized as a second pair of cooperating cylinder drums between which the second electrochemical device forming material is passed.

The electrolyte soaking devices and/or the shock freezing chambers may be located in the second enclosure, while the material moving device and any wheels that cooperate with it may be placed in the first enclosure.

Another aspect of the invention is concerned with an arrangement for processing an electrochemical device forming material, which arrangement comprises a shock freezing chamber configured to freeze the electrochemical device forming material.

Shock freezing may be made for adhering of different layers of the electrochemical device forming material to each other, which may be needed if it is a laminate. Alternatively or instead shock freezing may be made for fixing electrolyte that is present in the first, second or subsequent electrochemical device forming material.

The arrangement for processing the electrochemical device forming material may additionally comprise an electrolyte soaking device configured to soak the electrochemical device forming material in electrolyte and supply the soaked material to the shock freezing chamber.

The electrochemical device forming material may have two sides. In this case the electrolyte soaking device may be configured to coat one or both sides of the electrochemical device forming material with electrolyte.

The arrangement for processing the electrochemical device forming material may additionally comprise a pair of transfer belts, where a first of the belts is configured to guide a first side of the electrochemical device forming material through the electrolyte soaking device and a second of the belts is configured to guide a second side of the electrochemical device forming material through the electrolyte soaking device.

The first belt may be electrolyte permeable in order to soak the first side of first electrochemical device forming material and/or the second belt may be electrolyte permeable in order to soak the second side of first electrochemical device forming material.

The present invention has a number of advantages. It provides a continuous placing of a sheet of electrochemical device forming material without reciprocating movements. Thereby the production process combines high production speed with soft material handling and integrated production steps. This results in overall system footprint reduction, higher accuracy and fast production. The electrochemical device production is also capable to handle small and large area cells of various aspect ratios.

### BRIEF DESCRIPTION OF THE DRAWINGS

The present invention will in the following be described with reference being made to the accompanying drawings, where
fig. 1 schematically shows a side view of an electrochemical device producing arrangement according to a first embodiment comprising a first wheel that cooperates with a first type of material moving device in the form of a conveyor belt,
fig. 2 schematically shows a view from above of the first wheel,
fig. 3 schematically shows a sectional view taken at a section A - A of the first wheel in fig. 2,
fig. 4 shows a number of sheets with battery cell forming material being held by the first wheel,
fig.5 shows a side view of a second embodiment of the electrochemical device producing arrangement with a number of wheels that cooperate with the first type of material moving device,
fig. 6 shows a first sheet of battery cell forming material realized as a separator-electrode-separator sheet as well as a second sheet in the form of a separator- electrode-separator sheet,
fig. 7 shows a side view of a third embodiment of the electrochemical device producing arrangement with a second type of material moving device in the form of a central wheel where the cooperating wheels are peripheral wheels,
fig. 8A - C show a cam shaft with cam wheels, the central wheel with sheet holding elements as well as an aligning device for aligning the first peripheral wheel with the central wheel,
fig. 9 shows a side view of a fourth embodiment of the electrochemical device producing arrangement with the first type of material moving device with several cooperating wheels together in a first enclosure with a first production environment, which first enclosure is separated from a second enclosure with a second production environment by a gate and in which second enclosure material processing is performed,
fig. 10 shows a side view of a fifth embodiment of the electrochemical device producing arrangement with the first type of material moving device in the first enclosure and material processing in the second enclosure, and
fig. 11 shows a side view of a sixth embodiment of the electrochemical device producing arrangement with the first type of material moving device in the first enclosure and material processing in the second enclosure.

### DETAILED DESCRIPTION OF THE INVENTION

The present invention concerns an electrochemical device producing arrangement and a method for producing an electrochemical device, i.e. a device producing electricity for delivery and/or storage based on a chemical or electrochemical reaction, like a battery or a fuel cell.

In the arrangement and method for producing an electrochemical device an electrochemical device stack is produced based on sheets of electrochemical device material. In the following this type of production will be described in relation to the production of a battery cell stack using sheets of battery cell forming material.

Battery cell manufacturing may comprise multiple processes starting from active layer material mixing, current collector coating and processing down to jelly roll manufacturing and enclosing. Electrode manufacturing is a time consuming, quality determining step and therefore a cost intensive manufacturing process.

Layer stacking is one of the key steps of jelly roll manufacturing. Today exists three general types of jelly roll manufacturing:
- classical winding for cylindrical, prismatic or pouch cell format
- z-folding for prismatic or pouch format
- single sheet stacking for prismatic or pouch format

Z-folding or single sheet stacking result in more homogeneous jelly roll conditions due to inexistent bended portions with inhomogeneous pressure conditions resulting in tendency to longer cell lifetime. On the other hand, both z-folding and single sheet stacking require time consuming and more complex assembly steps due to repeating reciprocating movements of assembly line parts. Each reciprocating step consists of time-consuming acceleration and deceleration of gripping parts which represent significant mechanical load and wear out of system components. Z-folding represents a meaningful intermediate process between winding and single sheet stacking due to its processing of continuous separator material. Despite this advantage, it requires, as single sheet stacking, repeating reciprocating movements of active layer sheets.

Stacking precision is important to align anode and cathode layers with minimum overhang and inactive material losses. Jelly roll winding enables comparable easy and precise alignment, while z-folding and sheet stacking require more demanding alignment precision. New trends of large prismatic and pouch cells with sometimes/often significant longer width than height, require even more demanding soft and precise handling during stacking. This results in time consuming and quality critical manufacturing steps.

According to aspects of the present disclosure there is provided continuous single sheet stacking without reciprocating movements which is capable to handle small and large area cells. This can furthermore be done at high speed and with high precision.

According to aspects of the present disclosure, the arrangement comprises at least one wheel having a circumferential surface or rim. and a material moving device with which the at least one wheel cooperates and where the at least one wheel comprises a first wheel having a circumferential surface or rim.

The material moving device may additionally be equipped with a moveable transportation surface, which is moved along a transportation direction, which transportation direction may be linear or elliptical, such as circular. The material moving device may thereby be a linear or circular material moving device. The wheels may be positioned at different locations in relation to the material moving device for placing corresponding sheets of battery cell forming material in sheet placing positions at which the material moving device is to receive the sheets when the moveable surface moves. The locations may more particularly be separate locations along the transportation direction of the material moving device. The material moving device may also comprise a number of sheet holding elements and these sheet holding elements may be moved to the first sheet placing position for receiving the sheets of the first battery cell forming material from the first wheel. The sheet holding elements may be empty or carry one or more sheets of battery cell forming material at the sheet placing position.

The arrangement may use various principles for holding sheets of battery cell forming material in various stacking places, which holding principles may be based on mechanical, electrical/electrostatic, pneumatic, temperature (e.g. shock freezing), glueing or magnetic principles.

The wheels that cooperate with the material moving device may for instance use any of the principles when moving sheets of battery cell forming material.

The material moving surface and/or sheet holding elements of the material moving device may also use one of the above-mentioned principles for holding sheets of battery cell forming materials.

One sheet may form a battery cell stack used to form a battery cell. Alternatively, the sheets may be added by a sequence of wheels in a sequency of steps. If there is more than one wheel, the different sheets of battery cell forming material from the different wheels may thus be stacked upon each other. A battery cell stack may then be formed after the last wheel of the sequence has added a sheet of battery cell forming material. The battery cell stack may thereafter be delivered in a battery cell depositing area. The battery cell stack may thereafter be delivered to a further conveyor belt for transfer to a cell enclosing station.

A sheet holding element may pass a sheet placing position, such as the first sheet placing position, only once or it may pass the sheet placing position more than one time before it deposits a battery cell stack in the depositing area.

Depending on required system throughput, multiple wheels could be arranged to serve/stack on one larger stacking transfer system. Or vice versa a large single wheel of a process step can serve/handle multiple stacking transfer systems in order to boost performance without additional duplication of placing or stacking system parts.

The arrangement may further comprise an aligning system which aligns the wheels or the moving material device to the corresponding sheet placing positions.

For the first wheel, it can thereby be seen that it is positioned at a first location in relation to the material moving device and places a sheet of a first battery cell forming material at a first sheet placing position, and the material moving device is configured to receive the sheet of first battery cell material at the first sheet placing position, to move the sheet of first battery cell forming material away from the first sheet placing position and to place a battery cell stack comprising the sheet of first battery cell forming material in a depositing area. The first wheel may additionally obtain the sheet of first battery cell forming material at a first sheet receiving position and move the sheet to the first sheet placing position through holding the sheet to its circumferential surface or rim during rotation. Various holding structures can be implemented based on multiple physical effects like mechanical holding, pneumatic holding, electrostatic or magnetic holding. The first sheet placing position and the first sheet receiving position may be fixed positions at the perimeter of the first wheel. Thereby they do not rotate together with the first wheel.

If there is a second wheel, this may be positioned at a second location in relation to the material moving device and may place a sheet of second battery cell forming material in a second sheet placing position. The material moving device may then move the sheet of first battery cell forming material to the second sheet placing position and receive the sheets of the second battery cell forming material from the second wheel at the second sheet placing position and stack them on the sheets of first battery cell forming material for forming the battery cell stack. The second battery cell forming material may comprise separator material and/or second battery electrode material.

The material moving device may be a conveyor belt or any other kind of linear transport system. However, it may also be a central wheel, in relation to which the at least one wheel is a peripheral wheel.

Also, electrolyte filling represents a time consuming and quality defining step in cell production. Electrolyte filling is in conventional battery cell production lines the last step before hermetical sealing of the cell can or pouch shell. Time efficient electrolyte introduction and homogeneous electrolyte application on the entire active area may be required. Classical electrolyte filling and soaking processes introduce the electrolyte at one position of the cell with comparable questionable process control options.

According to aspects of the present disclosure there is also provided a fast and efficient application of electrolyte.

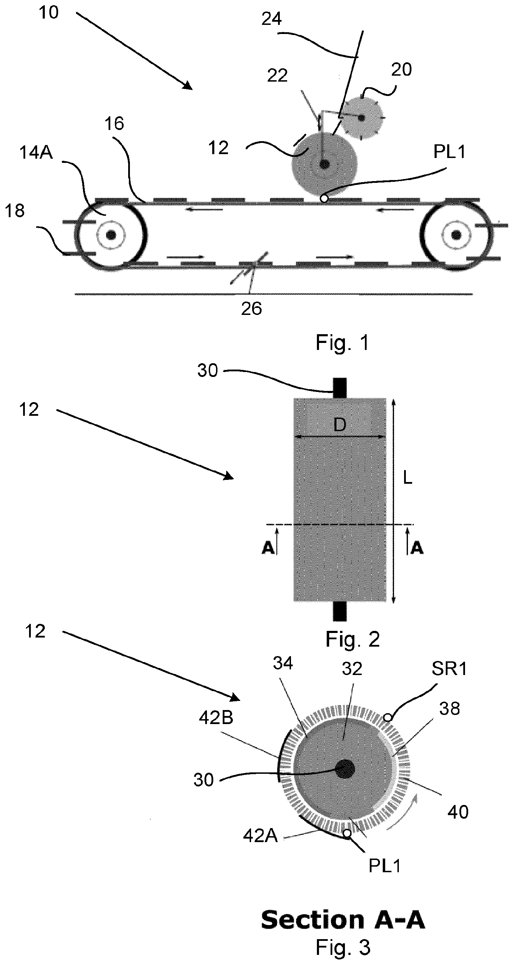

Fig. 1 shows a side view of a first embodiment of an arrangement 10 in which the material moving device is a conveyor belt 14A equipped with a moveable transportation surface 16, which is the surface of the belt that is used for transportation. In the arrangement 10 a roll of first battery cell forming material is transported to a first cutter 20, which cuts the roll into sheets of the first battery cell forming material. In the figure the cutter 20 is a cutting wheel. The first cutter 20 thus cuts sheets of first battery cell forming material out from a roll of first battery cell forming material (electrode singularizing). However, it should be realized that other types of cutters are possible such as e.g. laser cutters. Cutting process can be arranged before, on or after a certain process wheel. The cut sheets of first battery cell forming material are then passed to a first wheel 12 of the arrangement 10. The first wheel 12 is placed at a first location in relation to the conveyor belt 14A, in order to place the sheets of the first battery cell forming material at a first sheet placing position PL1. The first sheet placing position PL1 is a fixed position at which the conveyor belt 14A is to receive the sheets of first battery cell material for transporting them on the moveable surface 16. In the first embodiment the first location is the location of a rotational axis of the first wheel 12, which is placed above the conveyor belt 14A and the first sheet placing position PL1 may be a position vertically below the axis, such as at the perimeter of the first wheel 22. In general, given arrangements of mentioned embodiments can be aligned horizontal or vertical concerning their main process transport systems direction. This allows to adapt to given local manufacturing area footprint reduction requirements.

In the first embodiment the conveyor belt 14A is also equipped with sheet holding elements 18 that are transported on the transporting surface 16. The first wheel 12 places a sheet of first battery cell forming material at the first sheet placing position PL1 at the moment when an empty sheet holding element passes it and thereby it places the sheet on the empty sheet holding element. In this way a number of sheets of first battery cell forming material may be placed on different sheet holding elements for being transported by the conveyor belt 14A.

During the transportation the sheet holding elements always have the same orientation up until they reach a depositing or discharge area 26. Before reaching the depositing area 26 the sheet holding elements are horizontally oriented until they are tipped at the depositing area 26. As can be seen in fig. 1, a sheet holding element 18 travels along a first linear transportation direction, which is a also a first horizontal direction, in order to receive sheets of battery cell forming material at sheet placing positions of wheels that cooperate with the conveyor belt 14A. It can then travel along an opposite linear transportation direction, which is also a second transportation direction, for tipping at the depositing area 26. After tipping it is then possible for the sheet holding element 18 to return to travel along the first horizontal transportation direction. The second horizontal direction is provided vertically below the first horizontal direction. Thereby each sheet holding element receives a sheet of first battery cell forming material for the first wheel 12 and transports it to the depositing area 26, where the sheets are unloaded after complete stacking of required number of battery material layers per jelly roll. As was mentioned earlier the battery cell stack comprising said sheets may thereafter be transported to a cell enclosing station.

The first sheet placing position PL1 may depend on if there are any sheets of battery cell forming material already being transported on the conveyor belt 14A or not. For this reason, the arrangement 10 comprises a first aligning element 22 which aligns the first wheel 12 to the conveyor belt 14A and any sheets of battery cell forming material already on it. In the present case it aligns the first wheel 12 with the vertical position of an empty sheet holding element, i.e. a sheet holding element on which there are no sheets of battery cell forming material. The first aligning element 22 may be connected between the first cutter 20 and the first wheel 12 in order to provide the height adjustment of the first vertical location and thereby also of the first sheet placing position PL1. The vertical location of the first wheel 12 thereby also depends on if there are any sheets of battery cell forming material already being transported past the first sheet placing position PL1 or not. As there is only one wheel, it should be realized that the aligning element can be omitted.

In the first embodiment, the first wheel 12, the first cutter 20 and the first aligning element 22 form a first feed-in station. However, it should be realized that the cutter may as an alternative be provided as an independent single station.

Single sheet cutting can be implemented as e.g. conventional cutting/slitting, punching or laser cutting process. The cutter may additionally be enclosed in separate housing with separate exhaust and filter system to avoid contamination of the first wheel. If cutting is realized directly on a wheel, contamination and cutting debris transport could be arranged in the center axis of the wheel (within the wheel itself) to minimize footprint.

A simple single sheet feed-in could be placed at the cutter position in case of independent cutting process at distant or sub-supplier location.

Fig. 2 shows the first wheel 12 from above. It can be seen that it has a length L, a diameter D and is rotated around a first rotational axis 30. The length L provides the length of the battery cell, while the width of the battery cell depends on the diameter D. The longer the diameter is the wider it is possible to make the battery cell width. It is thereby also clear that the length L corresponds to the electrode length, with the electrode width depending on the diameter. Depending on the arrangement, length and width indicated before could be flipped, e.g. a long cell material could as well be placed by a short wheel. In fig. 2, a section that crosses the axis 30 at right angles is also taken between lines A-A.

Fig. 3 shows a cross-sectional view of the first wheel 12 taken along the line A-A, i.e. in a plane perpendicular to the axis 30. It can be seen that there is a first central part 32 that surrounds the first axis 30, and this first central part 32 may have a fixed position. It may thus not be rotated around the axis 30. Radially outside of the first central part 32 there is a rotating part 40. A first section of the central part 32 stretches a distance radially out from the axis 30, which distance is insufficient for reaching the rotational part 40. In the area between the central part 32 and the rotating part 40 of this first section there is defined a first chamber 34. A second section of the central part that follows the first section in a counterclockwise direction, stretches radially all the way out to the rotating part 40. A third section of the central part 30 that follows the second section in a counterclockwise direction, also stretches a distance radially out from the central axis 30 that fails to reach to rotational part 40 and in the area between the central part and the rotating part 40 of this third section there is defined a third chamber 38. The first and the third sections may stretch the same distance out towards the rotating part. A fourth section of the central part 32 that follows the third section in a counterclockwise direction, stretches radially all the way out to the rotating part 40. The fixed part 32 may in this case form a second chamber 36. The first, second and third chambers may be subject to three different pressures. The first chamber 34 may be filled with a gas with a first pressure Pi, the second chamber may be filled with a gas with a second pressure P2 and the third chamber 36 may be filled with a gas with a third pressure P3, which gas may be the same in all the chambers. The second pressure P2 may be higher than the first pressure Pi, while the third pressure P3 may be higher than the second pressure P2. The first pressure P1 may for instance be below 1 bar absolute, while both the second and third pressures P2 and P3 may be higher than 1 bar absolute. The rotating part 40 may comprise a perforated structure. The rotating part 40 may thus have openings leading to the chambers inside of it.

The second section of the central part 32 is centered around the first sheet placing position PL1 where sheets are placed on the conveyor belt. As can be seen counter-clockwise, the first chamber 34 stretches between a first sheet receiving position SR1, which is a position at which sheets are received from the cutter, to the beginning of the second section. The second section of the central part 32, which is a first piece of the second chamber, then follows up to the beginning of the third chamber 38. After the first piece of the second chamber follows the third chamber 38, which is in turn followed by the fourth section of the central part 32 that is a second piece of the second chamber. The second part of the second chamber then stretches to the first chamber 34 and the first receiving position PR1.

If the first wheel 12 is turned counterclockwise, sheets of first battery cell forming material are being supplied by the cutter 20 at the first sheet receiving position PR1 above the first chamber 34, where they are held to the wheel 12 through the use of the first pressure Pi, which is with advantage lower than the ambient pressure. The outer part 40, which is also the rim of the first wheel, then moves the sheets along the first chamber 34 up to the second section of the central part 32 or the first piece of the second chamber, where they are released at the first sheet placing position PL1 due to the use of the second pressure P2. As the moving part continues to move counterclockwise, the third pressure P3 of the third chamber 38 in turn ensures that no sheets will return up to the first receiving position PR1, while the fourth section or the second piece of the second chamber ensures that there is a smooth transition from the third pressure P3 to the first pressure P1.

As can be seen there is in fig. 3 a first and a second sheet 42A and 42B of first battery cell forming material carried in the above-described way by the first wheel 12 from the first sheet receiving position SR1 to the first sheet placing position PL1.

It can also be seen that the first wheel 12 obtains the sheets at the first sheet receiving position SR1 and moves the sheets to the first sheet placing position PL1 through holding the sheets to the circumference of the wheel 12 during rotation.

It should here be realized that it is possible to omit the third chamber as well as the fourth section of the second chamber. It is likewise possible to use an opposite rotation direction. In addition, size and chamber configuration can be varied in order to handle leakage and hold pressure conditions. Therefore, mentioned number of chambers is to be considered as just one of all possible arrangements.

It should also be realized that the use of pressure is just one way in which the picking of sheets may be performed. As one of many possible alternatives it is for instance possible to use magnetism. Another option is through the use of adhesives combined with mechanical lift-off. In addition, any other kind of physics based holding principle is possible, e.g. pneumatic, magnetic, electric/electrostatic, mechanical.

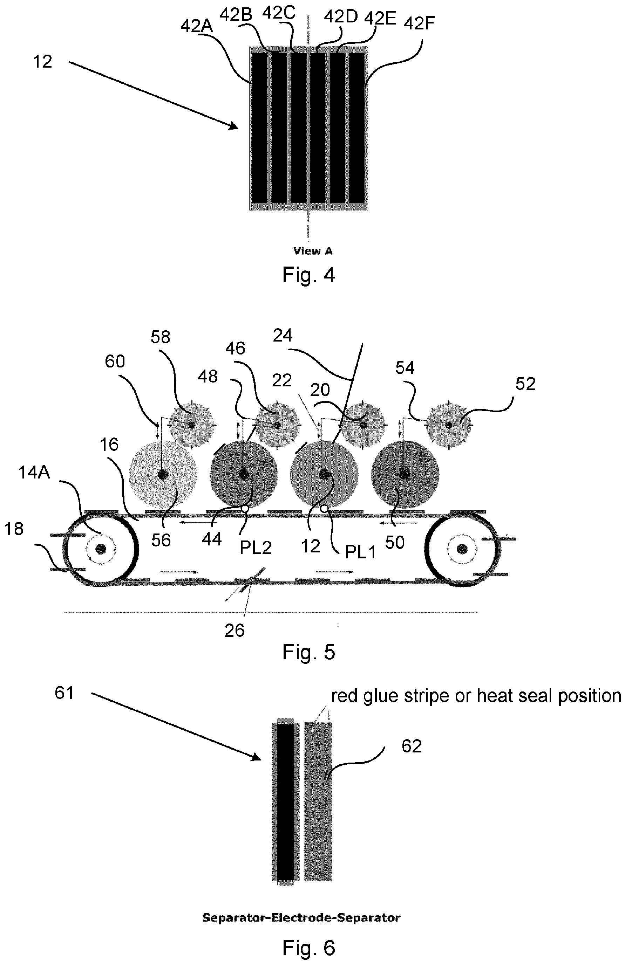

Fig. 4 shows the first wheel 12 on which several sheets of first battery cell forming material 42A - 42F are being held. One wheel may thus handle many sheets at once and allows to handle sheet layers with high aspect rations (high length to height ratios) in a transfer or process wheel.

In the present example the first battery cell forming material is a laminate of different material layers. It may comprise a first battery cell electrode material, such as an anode. It may additionally comprise second battery cell electrode material, such as a cathode, and/or separator material. The first battery cell forming material may thus comprise electrode layers and separator layers, where the electrode layers may comprise cathode layers and anode layers. The electrode layers may be metallic and the separator layers may be dielectric.

The electrochemical device producing arrangement provides a continuous placing of sheets of battery cell forming material without reciprocating movements and which is capable to handle small and large area cells. This allows for fast, accurate and soft handled cell sheet layers during stacking and general processing.

It is also optionally possible that a jelly roll isolation layer is applied to the stack. First and last jelly roll electrical isolation enclosure layer may thus be applied to the first sheet of battery cell material.

In case of pouch cells: pouch enclosure could be arranged as an additional feed-in station for the material moving device.

It should also be realized that the sheet may be soaked with electrolyte. The soaking may be performed beforehand, i.e. before the sheets are being picked up by the first wheel 12. It is for instance possible that the layers forming the laminate are presoaked with electrolyte and then laminated or that the laminate is soaked with electrolyte. The soaking with electrolyte may additionally be performed either before or after the cutting of the roll into sheets. Single side soaking can as well be implemented on the linear or circular transportation system by similar electrolyte application wheels. It is additionally possible that the soaking is made after the sheets having been carried by the conveyor belt, i.e. after the sheets have been dropped from the conveyor belt at the depositing area 26. If soaking is arranged after dropping discharging, it could be arranged as a fully stack of half stack emersion or fully drop in electrolyte process step.

It should here also be realized that it is possible that more wheels are used to cooperate with the conveyor belt. It is thereby possible that two or more wheels are used. If two wheels are used, then each wheel may place a laminate that is a combination of an electrode and at least one separator on the conveyor belt. In this case the wheels may be placed at separate locations along the first linear transportation direction. Each wheel may also have an associated aligning element. Thereby, each aligning element aligns a corresponding wheel with the sheet holding elements passing through a sheet placing position associated with the wheel.

Fig. 5 shows a side view of a second embodiment of a electrochemical device producing arrangement 10. Also, in this embodiment of the electrochemical device producing arrangement 10 there is the first type of material moving device 14A, i.e. a conveyor belt having a first linear transportation direction and a second linear transportation direction, which conveyor belt is also equipped with sheet holding elements. There is also a first wheel 12, a first cutter 20 and a first aligning element 22 in the same way as in the first embodiment, which in this case forms a first linear feed-in station. Additionally, there is a second wheel 44, a second cutter 46 a second aligning element 48 forming a second linear feed-in station, a third wheel 50, a third cutter 52 and a third aligning element 54 forming a third linear feed-in station as well as a fourth wheel 56, a fourth cutter 58 and a fourth aligning element 60 forming a fourth linear feed-in station. The number of consecutive feed-in, wheels and stacking systems depends on the layer/laminate arrangements that are produces. Therefore, the shown arrangement is merely an example of one possible realization.

As before, the first wheel 12 is placed at a first location in relation to the material moving device 14A for placing the sheets of the first battery cell forming material at the first sheet placing position PL1, which is a fixed position at which the conveyor belt 14A is to receive the sheets of first battery cell material for transporting them on the moveable surface 16. The first location is the location of the rotational axis of the first wheel 12, which is placed above the conveyor belt 14A and the first sheet placing position PL1 is a position vertically below the location of the axis, such as at the perimeter of the first wheel 12. The second wheel 12 is placed at a second location in relation to the material moving device 14A for placing the sheets of a second battery cell forming material at a second sheet placing position PL2, where also the second sheet placing position PL2 is a fixed position at which the conveyor belt 14A is to receive the sheets of second battery cell material for transporting them on the moveable surface 16. In this case the second location is the location of a rotational axis of the second wheel 44, which is placed above the conveyor belt 14A and the second sheet placing position PL2 may be a position vertically below the location of the axis, such as at the perimeter of the second wheel 44. The second location and second sheet placing position PL2 are in this case placed after the first location and the first sheet placing position PL1. A sheet holding element thus passes the first sheet placing position PL1 before it passes the second sheet placing position PL2.

The third wheel 50 is placed at a third location in relation to the material moving device 14A for placing sheets of a third battery cell forming material at a third sheet placing position. The third sheet placing position is a fixed position at which the conveyor belt 14A is to receive the sheets of third battery cell material for transporting them on the moveable surface 16. In the second embodiment the third location is the location of a rotational axis of the third wheel 50, which is placed above the conveyor belt 14A and the third sheet placing position may be a position vertically below the location of the axis, such as at the perimeter of the third wheel 50. The third location and third sheet placing position are in this case placed before the first location and the first sheet placing position PL1. A sheet holding element thus passes the third sheet placing position before it passes the first sheet placing position PL1. The fourth wheel 56 is placed at a fourth location in relation to the material moving device 14A for placing sheets of a fourth battery cell forming material at a fourth sheet placing position. The fourth sheet placing position is a fixed position at which the conveyor belt 14A is to receive the sheets of fourth battery cell material for transporting them on the moveable surface 16. In the second embodiment the fourth location is the location of a rotational axis of the fourth wheel 56, which is placed above the conveyor belt 14A and the fourth sheet placing position may be a position vertically below the location of the axis such as at the perimeter of the fourth wheel 56. The fourth location and fourth position are in this case placed after the second location and the second sheet placing position PL2.

The first, second third and fourth locations are thus separated from each other along the linear first transportation direction.

The third wheel 50 here performs a first sheet placing operation on the conveyor belt 14A, the first wheel 12 performs a second sheet placing operation on the conveyor belt 14A, the second wheel 44 performs a third sheet placing operation on the conveyor belt 14a and the fourth wheel 56 performs a fourth sheet placing operation on the conveyor belt 14A.

In this case the third aligning element 54 aligns the third wheel 50 with an empty sheet holding element, i.e. a sheet holding element on which there are no sheets of battery cell forming material in order to set the third sheet placing position at the level of the empty sheet holding element. This may be done through adjusting the third location, i.e. the position of the third wheel 50. The first aligning element 22 aligns the first wheel 12 with a sheet holding element comprising a sheet of third battery cell forming material from the third wheel 50 in order to set the first sheet placing position PL1 at the level of the sheet holding element carrying the sheet of third battery cell forming material. This may be done through adjusting the first location, i.e. the position of the first wheel 12. The second aligning element 48 aligns the second wheel 44 with the vertical position of a sheet holding element comprising a sheet of first battery cell forming material from the first wheel 12 on top of a sheet of third battery cell forming material from the third wheel 54 in order to set the second sheet placing position PL2 at the level of a sheet holding element carrying the sheet of third battery cell forming material and the sheet of the first battery cell forming material. This may be done through adjusting the second location, i.e. the position of the second wheel 44. The fourth aligning element 60 aligns the fourth wheel 56 with the vertical position of a sheet holding element comprising a sheet of second battery cell forming material from the second wheel 44 on top of a sheet of first battery cell forming material from the first wheel 12 and a sheet of third battery cell forming material from the third wheel 50 in order to set the fourth sheet placing position at the level of a sheet holding element carrying the sheet of third battery cell forming material, the sheet of the first battery cell forming material and the sheet of second battery cell forming material. This may be done through adjusting the fourth location, i.e. the position of the fourth wheel 56.

It can be seen that a stack of sheets of battery cell forming material is formed on the sheet holding elements as they are moved in the first horizontal direction. Depending on the system arrangement, stacking of a full cell could require multiple rounds on the linear transport system before a full stack is discharged at position 26. The finished battery cell stacks are then deposited at the depositing area when the sheet holding elements travel in the second horizontal direction.

The second and third battery cell forming materials may in this case be separator materials, while the first battery cell forming material may be an electrode such as an anode and the fourth battery cell forming material may be an electrode such as cathode. It can in this case be seen that none of the battery cell forming materials are laminates. However, it should be realized that this is also an option. One battery cell forming material may for instance be realized as combination of a separator-electrode-separator 61 as shown in the left side of fig. 6. A sheet may thus be an anode or cathode fully electrolyte soaked and partially or fully enclosed in separator. It may additionally be an anode-separator-cathode-separator or multiple of these material combinations. As another example a sheet may be a separator- electrode-separator 62 with local heat sealing or gluing of separator enclosed electrode as shown in the right side of fig. 6.

The separator 62 may in this case be equipped with glue for attaching to a neighboring material and/or with heat seal for being sealed.

The aligning system ensures a correct sheet and stack position despite high speed of the conveyor belt.

The arranged linear material feed as well as the rotative stacking principle enables a precise, homogeneous, soft material handling and high-speed layer stacking without reciprocating process steps. Also, acceleration of large masses and transfer of thin layers over significant distances is avoided. Thereby a precise alignment and positioning of single layers is achieved, while minimizing active area contamination risks.

In addition, sheet layer quality control steps can be incorporated during wheel-based transfer steps if quality control devices e.g. sensors are placed at a certain angle range of the circular wheel transfer step (e.g. layer integrity scanner, position scanner, thickness measurement device etc.).

Just as in the first embodiment it is possible to soak the different materials with electrolyte before or after cutting or before or after placing of sheets on the conveyor belt.

Above, the material moving device was a conveyor belt. It is also possible that it is a central wheel onto which one or more peripheral wheels place sheets of battery cell forming material.

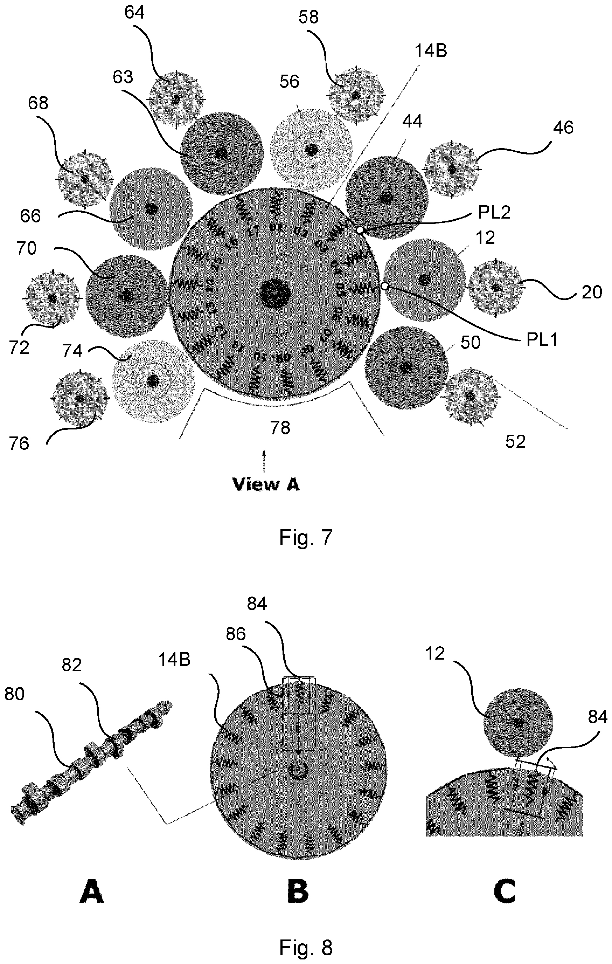

Fig. 7 shows a side view of a third embodiment where there are eight such peripheral wheels 12, 44, 50, 56, 63, 66, 70 and 74 placing sheets of battery cell forming material at sheet placing positions in different sectors passed by the central wheel 14B. The peripheral wheels may also each be associated with a corresponding cutter. The transportation direction of this type of material moving device is circular.

In this embodiment there is a first peripheral wheel 12 and a first cutter 20, which in this case forms a first circumferential feed-in station.

Additionally, there is a second peripheral wheel 44 and a second cutter 46 forming a second circumferential feed-in station, a third peripheral wheel 50 and a third cutter 52 forming a third circumferential feed-in station as well as a fourth peripheral wheel 56 and a fourth cutter 58 forming a fourth circumferential feed-in station. There is also fifth peripheral wheel 63 and a fifth cutter 64 forming a fifth circumferential feed-in station, a sixth peripheral wheel 66 and a sixth cutter 68 forming a sixth circumferential feed-in station, a seventh peripheral wheel 70 and a seventh cutter 72 forming a seventh circumferential feed-in station as well as an eighth peripheral wheel 74 and an eighth cutter 76 forming an eighth circumferential feed-in station.

The first peripheral wheel 12 is placed at a first location in relation to the central wheel 14B for placing the sheets of a first battery cell forming material at a first sheet placing position PL1. The first sheet placing position PL1 is a fixed position at which the central wheel 14B is to receive the sheets of first battery cell material for transporting them on its rim. Also here, the first location is the location of the rotational axis of the first wheel 12, which is placed radially outside the central wheel 14B and the first sheet placing position PL1 may be a position located radially between the axis and the central wheel 14B. The first sheet placing position PL may more particularly be a position at the perimeter of the first peripheral wheel 12 corresponding to a first angular position related to the central wheel 14B.

The second peripheral wheel 44 is placed at a second location in relation to the central wheel 14B for placing sheets of second battery cell forming material in a second sheet placing position PL2. Also, the second sheet placing position PL2 is a fixed position at which the central wheel 14B is to receive the sheets of second battery cell material for transporting them on its rim. Also here, the second location is the location of the rotational axis of the second wheel 44, which is placed radially outside the central wheel 14B and the second sheet placing position PL2 may be a position located radially between the axis and the central wheel 14B. The second sheet placing position PL2 may more particularly be a position at the perimeter of the second peripheral wheel 44 corresponding to a second angular position related to the central wheel 14B. The second location and second sheet placing position PL2 are in this case placed after the first location and the first sheet placing position PL2. A part of the wheel 14B on which a sheet of battery cell forming material that is to be placed thus passes the second sheet placing position PL2 after it passes the first sheet placing position PL1.

The third peripheral wheel 50 is placed at a third location in relation to the central wheel 14B for placing sheets of third battery cell forming material in a third sheet placing position. The third sheet placing position is also a fixed position at which the central wheel 14B is to receive the sheets of third battery cell material for transporting them on its rim. Also here, the third location is the location of the rotational axis of the third wheel 50, which is placed radially outside the central wheel 14B and the third sheet placing position may be a position located radially between the axis and the central wheel 14B. The third sheet placing position may also be a position at the perimeter of the third peripheral wheel 50 corresponding to a third angular position related to the central wheel 14B. The third location and third sheet handling position PL1 are in this case placed before the first location and the first sheet handling position PL1. A part of the central wheel on which a sheet of battery cell forming material that is to be placed thus passes the third sheet placing position before it passes the first sheet placing position PL1.

The fourth peripheral wheel 56 is placed at a fourth location in relation to the central wheel 14B for placing sheets of fourth battery cell forming material in at fourth sheet placing position. The fourth sheet placing position is a fixed position at which the central wheel 14B is to receive the sheets of fourth battery cell material for transporting them on its rim. Also here, the fourth location is the location of the rotational axis of the fourth peripheral wheel 56, which is placed radially outside the central wheel 14B and the fourth sheet placing position may be a position located radially between the axis and the central wheel 14B. The fourth sheet placing position may more particularly be a position at the perimeter of the fourth peripheral wheel 56 corresponding to a fourth angular position related to the central wheel 14B. The fourth location and fourth sheet handling position are in this case placed after the second location and the second sheet handling position.

The fifth peripheral wheel 63 is placed at a fifth location in relation to the central wheel 14B for placing sheets of fifth battery cell forming material in a fifth sheet placing position. The fifth sheet placing position is a fixed position at which the central wheel 14B is to receive the sheets of fifth battery cell material for transporting them on its rim. The fifth location is the location of the rotational axis of the fifth peripheral wheel 63, which is placed radially outside the central wheel 14B and the fifth sheet placing position may be a position located radially between the axis and the central wheel 14B. The fifth sheet placing position may more particularly be a position at the perimeter of the fifth peripheral wheel 12 corresponding to a fifth angular position related to the central wheel 14B. The fifth location and fifth sheet placing position are in this case placed after the fourth location and the fourth sheet handling position.

The sixth peripheral wheel 66 is placed at a sixth location in relation to the central wheel 14B for placing sheets of sixth battery cell forming material at a sixth sheet placing position. The sixth sheet placing position PL1 is a fixed position at which the central wheel 14B is to receive the sheets of sixth battery cell material for transporting them on its rim. The sixth location is the location of the rotational axis of the sixth peripheral wheel 66, which is placed radially outside the central wheel 14B and the sixth sheet placing position may be a position located radially between the axis and the central wheel 14B. The sixth sheet placing position may more particularly be a position at the perimeter of the sixth peripheral wheel 66 corresponding to a sixth angular position related to the central wheel 14B. The sixth location and sixth sheet handling position are in this case placed after the fifth location and the fifth sheet handling position.

The seventh peripheral wheel 70 is placed at a seventh location in relation to the central wheel 14B for placing sheets of seventh battery cell forming material at a seventh sheet placing position. The seventh sheet placing position is a fixed position at which the central wheel 14B is to receive the sheets of seventh battery cell material for transporting them on its rim. The seventh location is the location of the rotational axis of the seventh peripheral wheel 70, which is placed radially outside the central wheel 14B and the seventh sheet placing position may be a position located radially between the axis and the central wheel 14B. The seventh sheet placing position may more particularly be a position at the perimeter of the seventh peripheral wheel 12 corresponding to a seventh angular position related to the central wheel 14B. The seventh location and seventh sheet placing position are in this case placed after the sixth location and the sixth sheet placing position.

The eighth peripheral wheel 76 is placed at an eighth location in relation to the wheel 14B for placing sheets of eighth battery cell forming material at an eighth sheet placing position. The eighth sheet placing position is a fixed position at which the central wheel 14B is to receive the sheets of eighth battery cell material for transporting them on its rim. The eighth location is the location of the rotational axis of the eighth peripheral wheel 74, which is placed radially outside the central wheel 14B and the eighth sheet placing position may be a position located radially between the axis and the central wheel 14B. The eighth sheet placing position may more particularly be a position at the perimeter of the eighth peripheral wheel 74 corresponding to an eighth angular position related to the central wheel 14B. The eighth location and eighth sheet handling position are in this case placed after the seventh location and the seventh sheet handling position.

It can thereby be seen that the first, second, third, fourth, fifth, sixth, seventh and eighth locations are all placed along the rotational transportation direction of the central wheel.

In the third embodiment, the sheet holding elements are formed as plates with hooks that are transported on the surface of the central wheel, where the hooks of a plate hook into the sheet of battery cell forming material provided by a corresponding peripheral wheel.

As can be seen in fig. 8 A, B and C, the sheet holding elements are transported on the surface of the central wheel 14. Aligning is in this case performed through the use of a cam shaft 80 with a number of axially separated cam wheels 82, where each cam wheel is configured to raise at least one corresponding sheet holding element plate 84 to the sheet handling position of one of the peripheral wheels. The plate 84 is more particularly designed to hook into a sheet of battery cell forming material carried by the peripheral wheel and place the sheet on the plate. After the sheet placing position has been passed the level of the plate is lowered.

The raising is here made to the level of all sheets of battery cell forming material that the plate of the sheet holding element carries when passing the sheet placing position.

The plate is thus a roll-lift-off device for lifting off sheets of battery cell material from the peripheral wheels for transportation by the central stacking wheel.

As the central wheel 14B rotates, in this case counterclockwise, each peripheral wheel places a sheet of battery cell forming material at the sheet placing position at the time of passage of a sheet holding element. The sheet holding element then grabs the sheet. As there is a sequence of steps starting with a first sheet placing operation involving the placing of a sheet of third battery cell forming material using the third peripheral wheel 50, followed by a second sheet placing operation involving the placing of a sheet of first battery cell forming material using the first peripheral wheel 12, a third sheet placing operation involving the placing of a sheet of second battery cell forming material using the second peripheral wheel 44, a fourth sheet placing operation involving the placing of a sheet of fourth battery cell forming material using the fourth peripheral wheel 56, a fifth sheet placing operation involving the placing of a sheet of fifth battery cell forming material using the fifth peripheral wheel 63, a sixth sheet placing operation involving the placing of a sheet of sixth battery cell forming material using the sixth peripheral wheel 66, a seventh sheet placing operation involving the placing of a sheet of seventh battery cell forming material using the seventh peripheral wheel 70 and an eighth sheet placing operation involving the placing of a sheet of eighth battery cell forming material using the eighth peripheral wheel 74 a stack of battery cell forming material is formed, where eventually the stack is lifted off at a discharge position in the form of the depositing area 78.

In the given example there is formed a stack of sheets of the third, the first, the second, the fourth, the fifth, the sixth, the seventh and the eighth battery cell forming material. The first and the sixth battery cell forming material may be electrode material, such as anode material, the fourth and the eighth battery cell forming material may be electrode material such as cathode material, while the second, third, fifth and seventh battery cell forming materials may be separator materials.

This embodiment allows a bubble-free separator to electrode alignment optionally with given contact enhancement (assembly force of roll).

The aligning system also ensures a correct sheet and stack position despite high rotating speed of central wheel.

Also, the arranged rotational material feed as well as the rotative stacking principle enables a precise, homogeneous, and high-speed layer stacking without reciprocating process steps. Thereby a precise alignment and positioning of single layers is achieved, while minimizing active area contamination risk.

As was mentioned earlier it is possible that the battery cell forming material is soaked in electrolyte.

Electrolyte application could be made at a single electrode layer in continuous roll or cut conditions. This allows for homogeneous, time and electrolyte mass efficient active layer soaking. An electrolyte soaking device could comprise an electrolyte application roll or drum which presses electrolyte into the active roll or sheet. An electrolyte application drum may be equipped with a layer of sponge like material or defined notch arrangement to soak or hold electrolyte for subsequent electrolyte placement by classical roll to layer or roll to roll process. Electrolyte loading to application drum can be represented by external electrolyte slit, drum internal feed channels or additional drum coating roll or spray.

The electrolyte soaking device could also be arranged after electrode punching or cutting in a press like or roll-to-roll application process.

An electrolyte application drum may include cleaning sequence controlling correct electrolyte transfer and avoiding local unintended excess electrolyte build up. Excess electrolyte may be collected and recycled to the electrolyte loading stage.

Separator coverage of electrolyte-soaked electrode allows simple and loss free handling of intermediate battery cell stack comprising separator-electrode-separator materials. Sufficient electrode soaking of one electrode could be sufficient, as the second electrode may be supplied with excess electrolyte from the counterpart electrode.

A separator may also be soaked with excess electrolyte and may also transfer electrolyte to both the anode and the cathode.

Electrolyte application could be arranged independent of stacking manufacturing line. It could even be included in electrode supplier's factory on single sheets or electrode rolls with subsequent hermetic sealing of single sheets or electrode rolls. Intermediate layers and/or temperature control of the electrolyte-soaked electrode avoid unintended adhesion of rolled or stacked active layers. Defined temperature control could be used to intentionally adhere two layers like laminating or two layers on a stack. One intermediate layer could be represented by the separator.

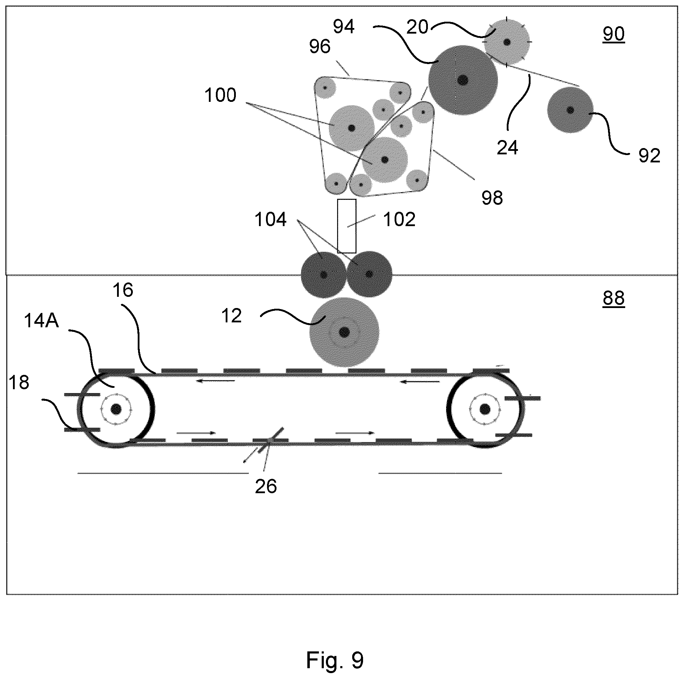

One way in which soaking may be done according to a fourth embodiment, which is a variation of the first embodiment, with a first wheel and a conveyor belt, is shown in fig. 9. The first wheel 12 may in this case be provided in a first enclosure 88 where there is a first production environment. In this case there is also an electrolyte soaking device in a second enclosure 90 with a second production environment. Different enclosures could be filled with different inert gas species (e.g. the first enclosure 88 could be filled with argon while the second enclosure 90 could be filled with nitrogen). The separate production environments may in addition to the use of different gases also or instead involve the use of separate temperatures and/or pressures.

In the shown embodiment, the first cutter 20 is placed in the second enclosure 90. A roll of first battery cell forming material is in this case unwound from a first material wheel 92 in the second enclosure 90 and cut by the first cutter 20, before sheets of first battery cell forming material are provided to the first electrolyte soaking device via a transporting wheel 94. The transporting wheel 94 places the sheets of first battery cell forming material between a first pair of single sheet transfer belts 96 and 98 that transport the separate sheets between a pair of electrolyte coating drums 100, where the single sheet transfer belts 96 and 98 and the electrolyte coating drums 100 together form the electrolyte soaking device that soaks the sheets of the first battery cell forming material in electrolyte.

Electrolyte soaking parts may be arranged as single or double side soaking/coating devices to either coat only one or both sides of a double sided first battery cell forming material, which may be an active material coated electrode material.

A first side of the first battery cell forming material may be guided through the electrolyte soaking device by a first of the belts 96, which first belt 96 may be electrolyte permeable in order to soak the first side of first battery cell forming material. A second side of the first battery cell forming material may be guided through the electrolyte soaking device by a second of the belts 98, which second belt may be electrolyte permeable in order to soak the second side of first battery cell forming material. It should here be realized that is possible that only one of the belts is used for soaking the first battery cell forming material.

The electrolyte soaking device then supplies the soaked sheets to a first shock freezing chamber 102 that freezes and fixes the electrolyte on the sheet layer. It thus fixes the electrolyte in the first battery cell forming material. In case the first battery cell forming material is a laminate comprising a number of layers including an electrode and a separator layer, the first shock freezing chamber may additionally freeze the laminate for adhering of the different layers to each other without additional process step.

The sheets then leave the second enclosure 90 via a first pair of cooperating cylinder drums 104 that form a first gate between the first and second enclosures 88 and 90 and between which drums the sheets of the first battery cell forming material pass from the second enclosure 90 to the first enclosure 88. The sheets may thereafter be fed to the first wheel 12 in the first enclosure 88, which in turn provides them to the conveyor belt 14A in the same way as in the first embodiment.

The first electrolyte soaking device thus soaks the first battery cell forming material in electrolyte before sheets of the battery cell forming material are being placed at the first sheet placing position.

The first pair of cooperating cylinder drums thus form a first gate between the first and second enclosure and between which first battery cell forming material is passed from the second to the first enclosure for being placed on the movable material device by the first wheel.

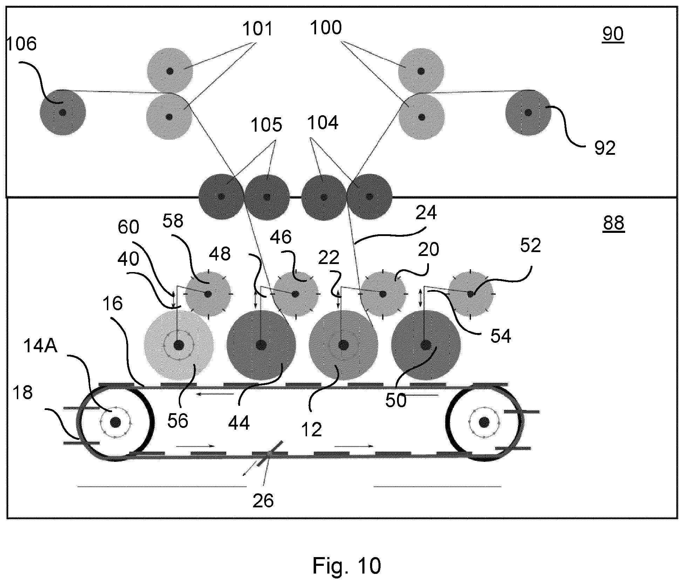

A fifth embodiment that is based on the second embodiment is shown in fig. 10. In this case a roll of first battery cell forming material is again unwound from a first material wheel 92 in the second enclosure 90 and provided to a first electrolyte soaking device comprising a first pair of electrolyte coating drums 100, which first electrolyte soaking device soaks the roll of first battery cell forming material in electrolyte. The first electrolyte soaking device then supplies the soaked roll to a first pair of cooperating cylinder drums 104 forming a first gate between the first and second enclosures 88 and 90. The roll of first battery cell forming material thereby passes from the second enclosure 90 to the first enclosure 88 via the first gate and is then fed to the first cutter 22, which cuts the roll into sheets and supplies them to the first wheel 12 in the same way as in the second embodiment.

In a similar manner a roll of second battery cell forming material is unwound from a second material wheel 106 in the second enclosure 90 and provided to a second electrolyte soaking device comprising a second pair of electrolyte coating drums 101, which second electrolyte soaking device is also placed in the second enclosure 90 and which soaks the roll of second battery cell forming material in electrolyte. The second electrolyte soaking device then supplies the soaked roll to the first enclosure 88 via a second pair of cooperating cylinder drums 105 that form a second gate between the first and second enclosures 88 and 90 and between which the roll of the second battery cell forming material pass from the second enclosure 90 to the first enclosure 88. The roll is then fed to the second cutter 46, which cuts the roll into sheets and supplies them to the second wheel 44 in the same way as in the second embodiment.

As before, the first electrolyte soaking device soaks the first battery cell forming material in electrolyte before sheets of the battery cell forming material are being placed at the first sheet placing position. This may be done in the same way as in the fourth embodiment using a first pair of transfer belts (not shown).

In this embodiment also the second electrolyte soaking device soaks the second battery cell forming material in electrolyte before sheets of the second battery cell forming material are being placed at the second sheet placing position. The soaking can be made in the same way as in the first electrolyte soaking device using a second pair of transfer belts (not shown).

Electrolyte soaking could thus be done on one or both of the battery cell forming materials, where both may comprise electrode material or one may comprise a battery cell forming material being made up of electrode material and separator material and the other only separator material.

A first side of the second battery cell forming material may thereby be guided through the second electrolyte soaking device by a third belt of a second pair of transfer belts, which third belt may be electrolyte permeable in order to soak the first side of second battery cell forming material. A second side of the second battery cell forming material may be guided through the electrolyte soaking device by a fourth belt of the second pair of transfer belts 96, which fourth belt may be electrolyte permeable in order to soak the second side of second electrochemical device forming material.

The first pair of cooperating cylinder drums 104 again form a first gate between the first and second enclosure and between which first battery cell forming material is passed from the second to the first enclosure for being placed on the movable material device 14A by the first wheel 12. The second pair of cooperating cylinder drums 105 in turn form a second gate between the first and second enclosure and between which second battery cell forming material is passed from the second to the first enclosure for being placed on the movable material device 14A by the second wheel 44.

Material process for the third and fourth wheels 50 and 56 are not shown in this schematic, but may be arranged in similar manner as shown for the first and second wheels 12 and 44.

It should also be realized that the use of a pair of drums is merely one way in which a gate can be implemented.

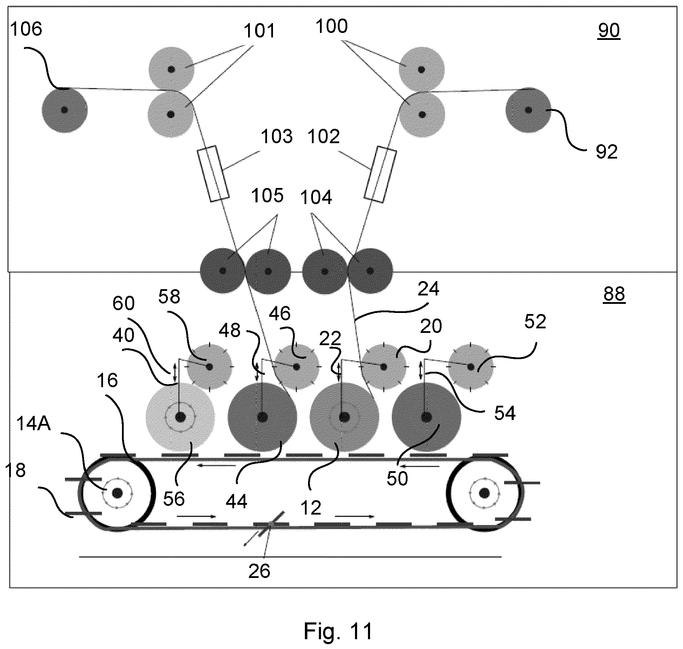

A sixth embodiment that is based on the second is shown in fig. 11. In this case a roll of first battery cell forming material is unwound from a first material wheel 92 in the second enclosure 90 and provided to an electrolyte soaking device comprising a first pair of electrolyte coating drums 100, which soak the roll of first battery cell forming material in electrolyte. The electrolyte soaking device then supplies the soaked roll to a first shock freezing chamber 102 that freezes the electrolyte, where the shock freezing could be carried out in the same way as in the fourth embodiment. The roll then leaves the second enclosure 90 via a first pair of cooperating cylinder drums 104 that form a first gate between the first and second enclosures and between which the roll of the first battery cell forming material 24 pass from the second enclosure 90 to the first enclosure 88. The roll 24 is then fed to the first cutter 22, which cuts the roll into sheets and supplies them to the first wheel 12.

In a similar manner a roll of second battery cell forming material is unwound from a second material wheel 106 in the second enclosure 90 and provided to a second electrolyte soaking device comprising a second pair of electrolyte coating drums 101, which soak the roll of second battery cell forming material in electrolyte. The electrolyte soaking device then supplies the soaked roll to a second shock freezing chamber 103 that freezes the electrolyte. The second shock freezing chamber 103 could operate in the same way as the first shock freezing chamber 102. It could thus freeze the second battery cell forming material, which may be done in order to fix the electrolyte in the second battery cell forming material. In case the second battery cell forming material is a laminate comprising a number of layers including an electrode and a separator layer, the freezing may additionally or instead be done for adhering of the different layers to each other without additional process step.

The roll then leaves the second enclosure 90 via a second pair of cooperating cylinder drums 105 that form a second gate between the first and second enclosures and between which the roll of second battery cell forming material pass from the second enclosure 90 to the first enclosure 88. The roll is then fed to the second cutter 46, which cuts the roll into sheets and supplies them to the second wheel 44.

It can be seen that the third and the fourth battery cell forming materials are not soaked in the fifth and sixth embodiments. It is possible that one or both of them are also soaked in the same way as the first and the third battery cell forming materials. Naturally they may also or instead be treated with shock freezing. Alternatively, it is possible that one or both of the third and fourth battery cell forming materials are soaked and/or treated with shock freezing instead of one or both of the first and the second battery cell forming materials.

A separator that is soaked with excess electrolyte may transfer electrolyte to both the anode and the cathode due to the pressure in the second enclosure.

Controlled application temperature/pressure/atmosphere: electrode and/or electrolyte temperature and atmospheric pre-conditioning avoids evaporation of electrolyte ingredients and control application conditions. e.g. cooling or subcooling of electrode and/or electrolyte minimizes losses and controls viscosity. Temperature conditioning of electrolyte filled electrode stabilizes single electrode sheets and simplifies further layer handling.

Aspects of the invention are also directed towards a method of producing battery cells.

This method may comprise obtaining, by the first wheel that is positioned at the first location in relation to the material moving device, a sheet of first battery cell forming material, placing, by the first wheel, the sheet of the first battery cell forming material in the first sheet placing position, moving, by the material moving device, the sheet of first battery cell forming material away from the first sheet placing position, and placing, by the material moving device, a battery cell stack comprising the sheet of first battery cell forming material in a depositing area.

The obtaining of a sheet of first battery cell forming material may comprise obtaining, by the first wheel, the sheet of first battery cell forming material at a first sheet receiving position and the method may comprise the step of moving the sheet to the first sheet placing position through holding the sheet to the circumference of the wheel during rotation.

The method may additionally comprise cutting, by a first cutter, the sheet of first battery cell forming material out from a roll of first battery cell forming material.

The method may additionally comprise moving, by the material moving device, the sheet holding elements to the first sheet placing position for receiving the sheets of the first battery cell forming material from the first wheel.

The method may also comprise aligning the first wheel or the moving material device to the first sheet placing position.

The method may furthermore comprise soaking, by a first electrolyte soaking device, the first battery cell forming material in electrolyte before sheets of the first battery cell forming material are being placed at the first sheet placing position.

The method may additionally comprise freezing, in a first shock freezing chamber, the first battery cell forming material.

If there is also a second wheel cooperating with the material moving device, the method may comprise obtaining, by the second wheel being positioned at the second location in relation to the material moving device, a sheet of second battery cell forming material and placing the sheet of second battery cell forming material in the second sheet placing position, moving, by the material moving device, the sheet of first battery cell forming material to the second sheet placing position and stacking, at the second sheet placing position, the sheet of the second battery cell forming material on the sheet of first battery cell forming material for forming the battery cell stack.

In this case the method may additionally comprise soaking, by a second electrolyte soaking device, the first battery cell forming material in electrolyte before sheets of the second battery cell forming material are being placed at the second sheet placing position.

Furthermore, the method may additionally comprise freezing, in a second shock freezing chamber, the second battery cell forming material.

There are a number of further variations that are possible.

The provision of electrolyte soaking and cutting could be exchanged in the process line. e.g. cutting could be done before electrolyte soaking or vice versa.

Described method and embodiments for enhanced battery cell production can be similarly with slight adaptions applied to fuel cell parts or stack production systems, e.g. membrane electrode assembly (MEA) production or MEA stacking between bipolar plates.

From the foregoing discussion it is evident that the present invention can be varied in a multitude of ways. Solutions and parts disclosed in the different embodiments can be flexibly combined to form one entire system. Shown schematics represent only exemplary embodiments and given list of embodiments is to be considered as non-limiting. It shall consequently be realized that the present invention is only to be limited by the following claims.

## Claims

1. An arrangement (10) for producing an electrochemical device comprising at least one wheel (12; 12, 44, 50, 56; 12, 44, 50, 56, 63, 66, 70, 74) for cooperating with a material moving device (14A; 14B), said at least one wheel comprising a first wheel (12),
the first wheel (12) being positioned at a first location in relation to the material moving device (14A; 14B) and configured to place a sheet (42A) of a first electrochemical device forming material at a first sheet placing position (PL1), and
the material moving device (14A; 14B) being configured to receive the sheet of first electrochemical device forming material (42A) at the first sheet placing position (PL1), to move the sheet of first electrochemical device forming material (42A) away from the first sheet placing position (PL1) and to place an electrochemical device stack (43) comprising said sheet of first electrochemical device forming material (42A) in a depositing area (26; 78).

2. The arrangement (10) according to claim 1, wherein the first wheel (12) is configured to obtain said sheet of first electrochemical device forming material at a first sheet receiving position (PRi) and to move the sheet to the first sheet placing position (PL1) through holding the sheet on the circumferential surface of the wheel during rotation.

3. The arrangement (10) according to claim 1 or 2, further comprising a second wheel (50) being positioned at a second location in relation to the material moving device (14A; 14B) and configured to place a sheet of second electrochemical device forming material in a second sheet placing position, wherein the material moving device is configured to move the sheet of first electrochemical device forming material to the second sheet placing position and to receive said sheets of the second electrochemical device forming material from the second wheel (50) at the second sheet placing position (PL2) and stack them on the sheets of first electrochemical device forming material for forming said electrochemical device stack (43).

4. The arrangement (10) according to any previous claim, further comprising a first cutter (20) configured to cut the sheet (42A) of first electrochemical device forming material out from a roll of first electrochemical device forming material.

5. The arrangement (10) according to any previous claim, wherein the material moving device (14A; 14B) comprises a number of sheet holding elements (18; 84) and the material moving device (14A; 14B) is configured to move these sheet holding elements (18; 84) to the first sheet placing position (PL1) for receiving said sheets (42A, 42B) of the first electrochemical device forming material from the first wheel (12).

6. The arrangement (10) according to claim 5, wherein the sheet holding elements are empty or carry one or more sheets of electrochemical device forming material at the sheet placing position.

7. The arrangement (10) according to any previous claim, further comprising an aligning system (22, 48, 54, 60; 80, 84) configured to align the first wheel or the moving material device (14A; 14B) with the first sheet placing position (PL1).

8. The arrangement (10) according to any previous claim, wherein the material moving device is a linear material moving device, such as a conveyor belt (14A).

9. The arrangement (10) according to claim 8 when depending on claim 5 and 7, wherein the sheet holding elements (18) are transported on the linear material moving device (14A) and the aligning system comprises aligning elements (22, 48, 54, 60), each being configured to align a corresponding wheel (12, 44, 50, 56) with the sheet holding elements (18) passing through a sheet placing position (PL1) associated with the wheel.

10. The arrangement (10) according to any of claims 1 - 7, wherein the material moving device is a central wheel (14B).

11. The arrangement (10) according to claim 10 when depending on claim 5 and 7, wherein the sheet holding elements (82) are transported on the surface of the central wheel (14B) and the aligning system comprises a cam shaft (80) with cam wheels (82), where each cam wheel (80) is configured to raise a corresponding sheet holding element (84) to a sheet placing position (PL1) associated with a wheel.

12. The arrangement according to any previous claim, further comprising a first shock freezing chamber (102) configured to freeze the first electrochemical device forming material.

13. The arrangement (10) according to any previous claim, further comprising a first electrolyte soaking device (100) configured to soak the first electrochemical device forming material in electrolyte before sheets of the electrochemical device forming material are being placed at the first sheet placing position (PL1).

14. The arrangement (10) according to claim 12 or 13, wherein the first wheel (12) is placed in a first enclosure (88) with a first production environment and further comprising a second enclosure (90) with a second production environment, and a first gate (104) between the first and second enclosure and through which first electrochemical device forming material is passed from the second to the first enclosure for being placed on the movable material device (14A) by the first wheel (12).

15. A method of producing electrochemical devices comprising:
obtaining, by a first wheel (12) that is positioned at a first location in relation to a material moving device (14A; 14B), a sheet (42A) of first electrochemical device forming material,
placing, by the first wheel (12), said sheet (42A) of said first electrochemical device forming material in a first sheet placing position (PL1) at which the material moving device (14A; 14B) is to receive sheets (42A, 42B) of the first electrochemical device forming material from the first wheel (12),
moving, by the material moving device (14A; 14B), the sheet of first electrochemical device forming material (42A) away from the first sheet placing position (PL2), and
placing, by the material moving device, an electrochemical device stack (43) comprising said sheet of first electrochemical device forming material in a depositing area (26; 78).
